# EUROPÄISCHE PATENTSCHRIFT

(11) **EP 4 196 358 B1**
(45) Veröffentlichungstag und Bekanntmachung des Hinweises auf die Patenterteilung: **07.01.2026**
(21) Anmeldenummer: 21739099.6
(22) Anmeldetag: 01.07.2021
(51) Int. Cl.: B60G 7/00

(54) **KRAFTFAHRZEUG**
MOTOR VEHICLE
VÉHICULE À MOTEUR

(30) Priorität: 12.08.2020 DE 102020121159
(43) Veröffentlichungstag der Anmeldung: 21.06.2023
(73) Patentinhaber: Audi AG, 85045 Ingolstadt (DE)
(72) Erfinder: BAIER, Sebastian, 36163 Poppenhausen (DE)
(86) Internationale Anmeldenummer: PCT/EP2021/068139
(87) Internationale Veröffentlichungsnummer: WO 2022/033762

(56) Entgegenhaltungen:
- CN-U- 201 694 013
- KR-A- 20110 054 471
- KR-A- 20140 072 521
- KR-B1- 101 305 680
- US-B2- 10 543 726

## Beschreibung

Die Erfindung betrifft ein Kraftfahrzeugs gemäß der im Oberbegriff des Patentanspruches 1 angegebenen Art.

Bei einem sogenannten Small-Overlap-Crash, d.h. einer Frontalkollision mit einer geringen Breitenüberdeckung, besteht bekanntlich die Gefahr, dass - da aufgrund der geringen seitlichen Breitenüberdeckung die steifen Längs- und/oder Querträgerstrukturen der Kraftfahrzeugkarosserie nicht zur Absorption der Aufprallenergie beitragen - das kollisionsseitige Vorderrad in die Fahrgastzelle eindringt und Fahrzeuginsassen verletzt.

Aus der DE 10 2013 016 766 A1 ist ein Verfahren zur Steuerung eines verbesserten Deformationsverhaltens in einem Kraftfahrzeug-Vorderwagen im Zuge einer Small-Overlap-Deformation bekannt. Das Verfahren sieht vor, dass ein Rad, das in einem Nichtkollisionsfall durch lasttragende Führungsmittel relativ zu der Kraftfahrzeugkarosserie geführt wird, in einem Kollisionsfall in seiner Stellung dadurch beeinflusst wird, dass eine Lastübertragung durch mindestens ein lastübertragendes Führungsmittel auf das Rad unterbrochen und das Rad in Fahrzeuglängs- und -querrichtung betrachtet nach hinten außen ausgelenkt und infolgedessen auf steife Bereiche und insbesondere Schweller zugeführt wird.

Lastübertragende Führungsmittel, nachfolgend verkürzt als Lenker bezeichnet, sind aus dem Stand der Technik hinreichend bekannt. Lediglich beispielhaft wird auf die JP 20071394 A verwiesen, aus der bereits ein ein Lagerauge aufweisender Lenker, der über ein in das Lagerauge eingepresstes Fahrwerkslager schwenkbeweglich an der Fahrzeugkarosserie gelagert ist, bekannt ist. Das Ausbilden des Lagerauges eines Lenkers als Sollbruchstelle, das bei Überschreiten einer vorgegebenen Missbrauchslast aufbricht, ist in der CN 201 694 013 U offenbart.

Während das Dokument US 10 543 726 B2 ein Kraftfahrzeug entsprechend dem Oberbegriff des Anspruchs 1 offenbart, zeigt das Dokument KR 2014 0072521 A ein weiteres beispielhaftes Kraftfahrzeug auf.

Der Erfindung liegt die Aufgabe zugrunde, ein Kraftfahrzeugs gemäß der im Oberbegriff des Patentanspruches 1 angegebenen Art derart weiterzubilden, dass im Falle eines Small-Overlap-Crashs ein gezieltes Versagen eines Lenkers des Lenkerverbunds sichergestellt ist, ohne dabei jedoch die Funktion des Lenkers im Betrieb sowie bei Sonder- und Missbrauchsereignissen zu schwächen.

Diese Aufgabe wird durch die kennzeichnenden Merkmale des Patentanspruches 1 in Verbindung mit seinen Oberbegriffsmerkmalen gelöst.

Die Unteransprüche 2 bis 6 stellen vorteilhafte Weiterbildungen dar.

In bekannter Art und Weise umfasst das Kraftfahrzeug eine einen Lenkerverbund aufweisende Radaufhängung für ein Rad einer Vorderachse eines Kraftfahrzeugs, wobei das Rad über den Lenkerverbund am Kraftfahrzeugaufbau angelenkt bzw. geführt. Zudem ist die Radaufhängung so ausgebildet, dass im Falle eines Small-Overlap-Crashs, d.h. einer Frontalkollision mit einem Hindernis mit geringer Breitenüberdeckung, die Lastübertragung eines Lenkers des Lenkerverbundes auf das unfallseitige Rad unterbrochen und das Rad in Fahrzeuglängs- und -querrichtung (x-, und y-Richtung) betrachtet nach hinten außen ausgelenkt wird.

Der Lenker, insbesondere Querlenker, umfasst hierzu in bekannter Art und Weise eine Lenkerbasis mit einer radseitigen Lagerstelle sowie einer kraftfahrzeugaufbauseitigen Lagerstelle. Die kraftfahrzeugaufbauseitige Lagerstelle ist dabei in Form eines Lagerauges ausgebildet, in das ein Gummi-Metall-Lager als Fahrwerkslager eingepresst ist. Über das in das Lagerauge eingepresste Gummi-Metall-Lager ist der Lenker in bekannter Art und Weise um die im Wesentlichen in Fahrzeuglängsrichtung ausgerichtete Lagerachse schwenkbeweglich zwischen zwei im Wesentlichen in y-Richtung, d.h. Fahrzeugquerrichtung, ausgerichteten Lagerschenkeln einer Lagerkonsole am Kraftfahrzeugaufbau gelagert. Lediglich der Vollständigkeit halber wird noch darauf hingewiesen, dass im Folgenden für Richtungsangaben ein fahrzeugfestes Koordinatensystem verwendet wird, dessen x-Achse entlang der Fahrzeuglängsachse verläuft und in Fahrtrichtung (= Vorwärtsfahrtrichtung) zeigt, dessen y-Achse entlang der Fahrzeugquerachse verläuft und - entsprechend - nach links zeigt und dessen z-Achse entlang der Fahrzeughochachse nach oben ausgerichtet ist.

Das Lagerauge ist dabei als Sollbruchteil ausgebildet, das bei Überschreiten einer vorgegebenen Missbrauchslast gezielt aufbricht.

Die Missbrauchslast ist dabei so gewählt, dass lediglich im Falle des Überschreitens einer entsprechend vorgegebenen maximal zulässigen Momentenbelastung und/oder Überschreiten einer entsprechend vorgegebenen maximalen Zugbelastung, welches insbesondere nur bei einem Small-Overlap-Crash, d.h. einer Frontalkollision mit geringer Breitenüberdeckung, zu erwarten ist bzw. sind, ein Aufbrechen des Lagerauges auftritt. D.h. der Betrieb des Lenkers im normalen Fahrbetrieb sowie bei sonstigen Sonder- und/oder Missbrauchsereignissen, wie z.B. ein sehr forsches Überfahren einer hohen Bordsteinkante oder ähnliches, ist sichergestellt.

Erfindungsgemäß ist vorgesehen, dass die Lenkerbasis im Bereich des Lagerauges einen sich in Richtung der Lagerachse erstreckenden, knopfförmigen Anschlag aufweist, der sich in x-Richtung (=> Fahrzeuglängsachse) nach hinten erstreckend ausgerichtet ist und dass an dem in x-Richtung betrachtet hinteren Lagerschenkel eine Abstützfläche für den lenkerbasisseitigen knopfförmigen Anschlag ausgebildet ist. Die am hinteren Lagerschenkel ausgebildete Abstützfläche und der an der Lenkerbasis ausgebildete Anschlag sind dabei so zueinander positioniert und so dimensioniert, dass nach Überschreiten einer festgelegten, maximal zulässigen Schwenkbewegung des Lenkers in der kraftfahrzeugaufbauseitigen Lagerkonsole um die Fahrzeughochrichtung (z-Richtung) der Anschlag die am hinteren Lagerschenkel ausgebildete Abstützfläche kontaktiert. Durch die Kontaktierung des Anschlags mit der Abstützfläche wird in vorteilhafter Weise ein Hebeleffekt erzeugt, mit der Folge, dass das beabsichtigte, gezielte Aufbrechen des Lagerauges unterstützt wird.

Um ein gezieltes Aufbrechen des Lagerauges sicherzustellen, weist das Lagerauge bevorzugt zwei - in radialer Richtung r des Lagerauges betrachtet - im Wesentlichen gegenüberliegende Sollbruchstellen auf.

Gemäß einer ersten Ausführungsform sind dabei die Sollbruchstellen in Form von zwei Kerbstellen ausgebildet, die in die in x-Richtung (=> Fahrzeuglängsachse) des Kraftfahrzeugs gesehen nach vorne ausgerichtete, axial endseitige ringförmige Stirnfläche des Lagerauges eingebracht sind.

Eine zweite Ausführungsform sieht vor, dass die Sollbruchstellen in Form von zwei - in Umfangsrichtung des Lagerauges betrachtet - lokal begrenzte Materialabtragungen der Lageraugenmantelfläche ausgebildet sind.

Vorteilhaft an der Ausbildung der Sollbruchstellen in Form von Kerbstellen bzw. Materialabtragungen ist, dass diese mittels spanenden Fertigungsverfahren und/oder umformenden Fertigungsverfahren schnell und kostengünstig herstellbar sind.

Der Lenker ist dabei bevorzugt als Querlenker ausgebildet. Die Anordnung des Lenkers ist beliebig und packageabhängig, d.h. der Querlenker kann als Traglenker zusammen mit einem Längslenker in der unteren Lenkerebene angeordnet sein. Denkbar ist aber auch die Anordnung des Querlenkers mit zumindest einem weiteren Längslenker in der oberen Lenkerebene.

Wie bereits ausgeführt, ist der Lenker über ein in das Lagerauge eingepresstes Gummi-Metall-Lager um die im Wesentlichen in x-Richtung (=> Fahrzeuglängsachse) ausgerichtete Lagerachse schwenkbeweglich gelagert. Hierdurch ist gewährleistet, dass im Falle eines Small-Overlap-Crashs und die daraus resultierende Auslenkung des Lenkers in x-Richtung nach hinten, d.h. entgegen der Fahrtrichtung, die auftretende kardanische Verschränkung im Gummi-Metall-Lager ein hohes Moment M in der kraftfahrzeugaufbauseitigen Lagerstelle um die Hochachse erzeugt, sodass aus der Kombination aus Moment M und der auf den Lenker einwirkenden Zugkraft, das beabsichtigte Aufreißen des Lagerauges bzw. der Sollbruchstellen des Lagerauges sichergestellt ist.

Vorzugsweise ist dabei der Lenkerverbund der Radaufhängung über einen Hilfsrahmen am Kraftfahrzeugaufbau gelagert.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:
- Fig. 1: ein erstes nicht erfindungsgemäßes Beispiel eines Lenkers;
- Fig. 2 der: Lenker aus Fig. 1 im verbauten Zustand in einer Radaufhängung;
- Fig. 3: die Radaufhängung aus Fig. 2 in einer Small-Overlap-Crashsituation;
- Fig. 4: der Lenker entsprechend einem zweiten nicht erfindungsgemäßen Beispiel;
- Fig. 5: eine erfindungsgemäße Ausgestaltung des Lenkers aus Fig. 4;
- Fig. 6: der Lenker aus Fig. 4 im verbauten Zustand in einer Radaufhängung, und
- Fig. 7: der Lenker aus Fig. 4 in einer Small-Overlap-Crashsituation.

In der nachfolgenden Beschreibung und in den Figuren werden zur Vermeidung von Wiederholungen gleiche Bauteile und Komponenten mit gleichen Bezugszeichen gekennzeichnet, sofern keine weitere Differenzierung erforderlich oder sinnvoll ist.

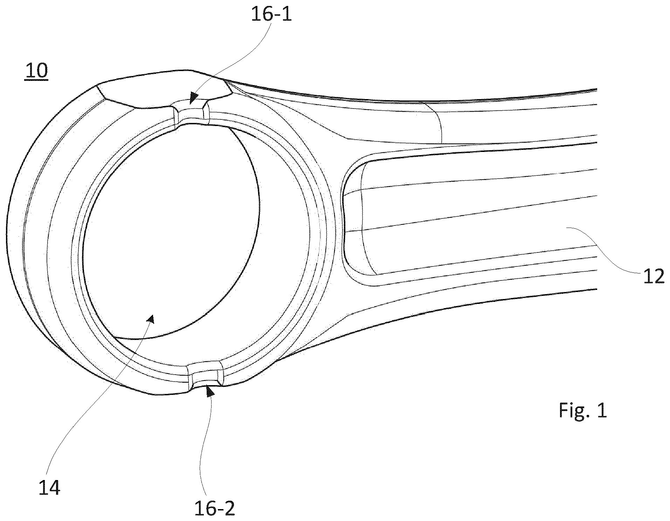

Fig. 1 zeigt einen insgesamt mit der Bezugsziffer 10 bezeichneten Lenker für eine Radaufhängung eines Kraftfahrzeugs. Der Lenker 10 umfasst eine Lenkerbasis 12 sowie ein an einem Ende der Lenkerbasis 12 ausgebildetes, insgesamt mit der Bezugsziffer 14 bezeichnetes Lagerauge zur Aufnahme eines - hier nicht dargestellten - Fahrwerkslagers. Wie Fig. 1 weiter zeigt, weist das Lagerauge 14 zwei radial gegenüberliegend angeordnete Sollbruchstellen 16-1, 16-2 auf, die vorliegend in Form von zwei Kerbstellen ausgebildet sind.

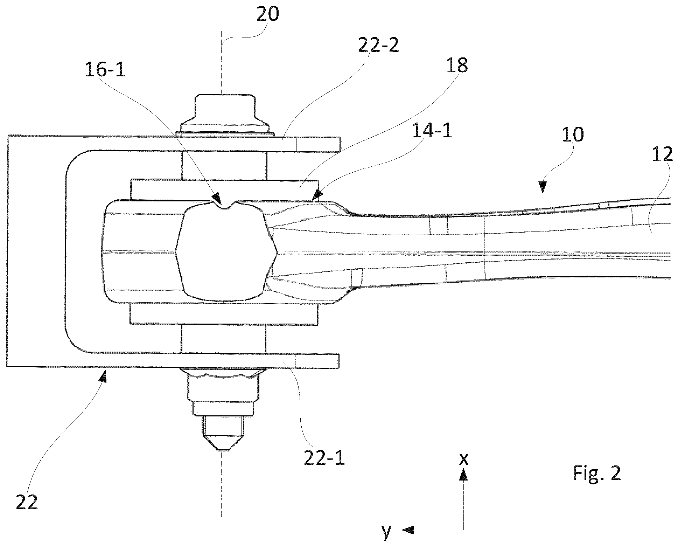

Im verbauten Zustand, vgl. Fig. 2, ist der Lenker 10 über ein in das Lagerauge 14 eingepresstes Gummi-Metall-Lager 18 um eine im Wesentlichen in x-Richtung ausgerichtete Lagerachse 20 schwenkbeweglich zwischen zwei Lagerschenkeln 22-1, 22-2 einer am Kraftfahrzeugaufbau angeordneten Lagerkonsole 22 gelagert. Wie Fig. 2 weiter zu entnehmen ist, sind dabei die beiden Kerbstellen in die in x-Richtung betrachtet (=Fahrtrichtung) vordere ringförmige Stirnfläche 14-1 des Lagerauges 14 eingebracht. Die Kerbstellen sind dabei so dimensioniert, dass bei Überschreiten einer vorgegebenen Missbrauchslast das Lagerauge 14 gezielt aufbricht, um ein Separieren des Lenkers 10 zu ermöglichen.

Die Missbrauchslast ist dabei so gewählt, dass lediglich im Falle des Überschreitens einer entsprechend vorgegebenen maximal zulässigen Momentenbelastung und/oder Überschreiten einer entsprechend vorgegebenen maximalen Zugbelastung, welches insbesondere nur bei einem Small-Overlap-Crash, d.h. einer Frontalkollision mit geringer Breitenüberdeckung, zu erwarten ist, ein Aufbrechen des Lagerauges 14 auftritt. D.h. der Betrieb des Lenkers 10 im normalen Fahrbetrieb sowie bei sonstigen Sonder- und/oder Missbrauchsereignissen, wie z.B. ein sehr forsches Überfahren einer hohen Bordsteinkante oder ähnliches, ist sichergestellt.

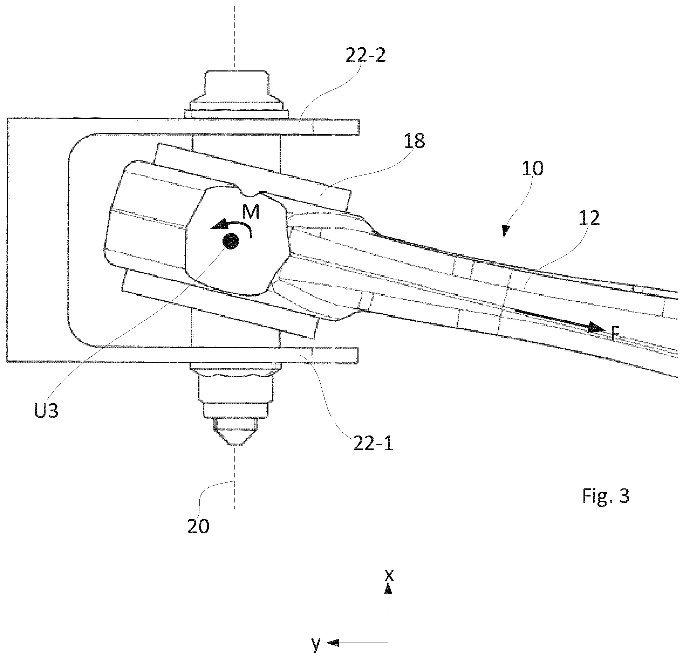

In einer Small-Overlap-Crashsituation, wie in Fig. 3 dargestellt, wird der Lenker 10 in x-Richtung nach hinten (entgegen der Fahrtrichtung) um den - hier als U3-Punkt - bezeichneten Lagerpunkt ausgelenkt. Durch die Auslenkung des Lenkers 10 nach hinten, entsteht eine kardanische Verschränkung im Gummi-Metall-Lager 18, wodurch ein hohes Rückstellmoment M im U3-Punkt um die z-Achse erzeugt wird. Die Kombination aus Moment M und der auf den Lenker 10 wirkenden Zugkraft F ist ausreichend, um ein gezieltes Versagen des Lagerauges 14 auszulösen, d.h. das Lagerauge 14 bricht zuerst an den als Kerbstellen ausgebildeten Sollbruchstellen 16-1 und 16-2 auf, reißt im Anschluss komplett auf und gibt den Lenker 10 frei, sodass ein frühestmögliches Separieren des Lenkers 10 gewährleistet ist.

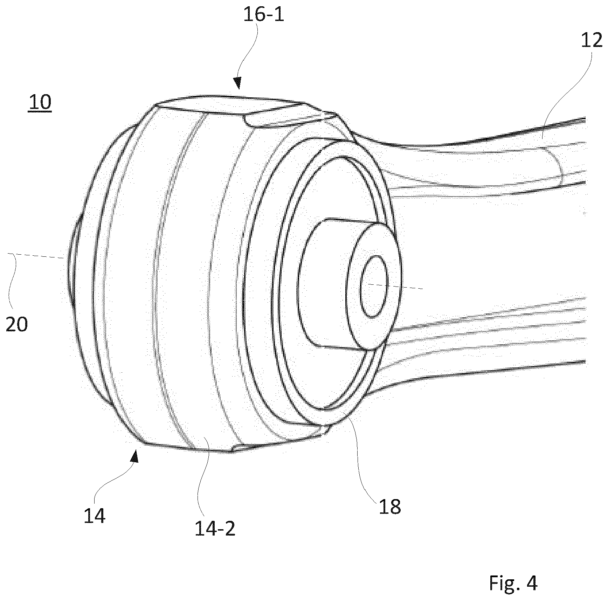

Das in Fig. 4 dargestellte Beispiel des Lenkers 10 entspricht im Wesentlichen dem in Fig. 1 dargestellten Beispiel; gemäß dem in Fig. 4 dargestellten Beispiel sind lediglich die beiden radial gegenüberliegenden Sollbruchstellen als - in Umfangsrichtung des Lagerauges 14 betrachtet - lokal begrenzte Materialabtragungen in der äußeren Mantelfläche 14-2 des Lagerauges 14 ausgebildet. Das Verhalten in einer Small-Overlap-Crashsituation entspricht dem zu Fig. 3 Dargelegten.

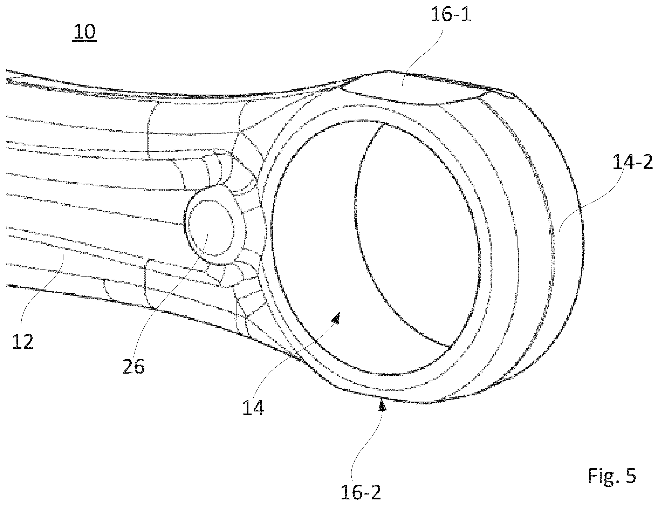

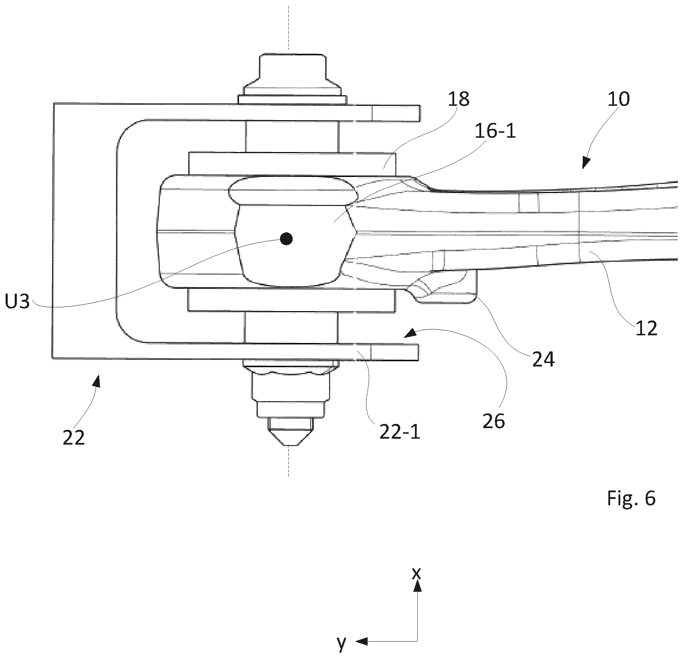

Gemäß der in Fig. 5 dargestellten Ausführungsform ist an der Lenkerbasis 12 im Bereich des Lagerauges 14 ein Anschlag 24 angeformt. Wie Fig. 6 zu entnehmen ist, ist der Anschlag 24 so an der Lenkerbasis 12 angeordnet, dass im verbauten Zustand des Lenkers 10 der Anschlag 24 sich in x-Richtung (= Fahrtrichtung) nach hinten erstreckend ausgerichtet ist. Zudem ist - wie Fig. 6 weiter zu entnehmen ist - an der gegenüberliegenden Lagerkonsole 22-1, d.h. der in x-Richtung (Fahrtrichtung) hinteren Lagerkonsole 22-1, eine Abstützfläche 26 ausgebildet.

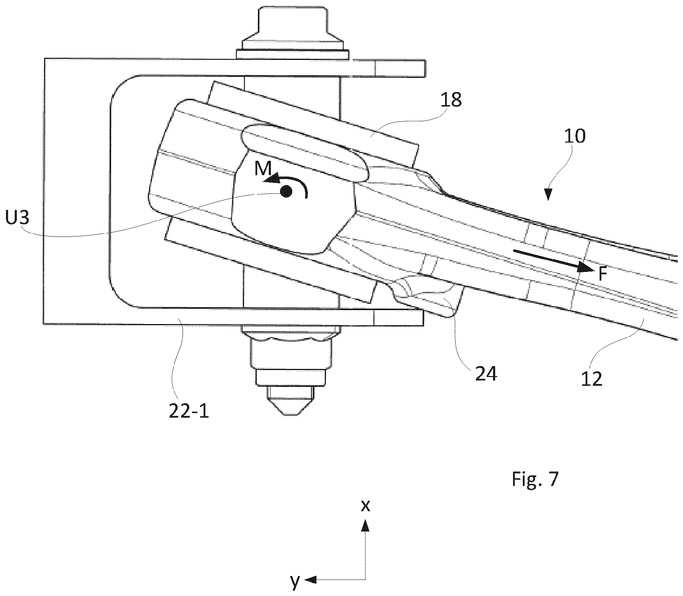

Der Anschlag 24 und die Abstützfläche 26 sind dabei so positioniert und dimensioniert, dass in einer Small-Overlap-Crashsituation, vgl. Fig. 7, nach Überschreiten einer festgelegten, maximal zulässigen Schwenkbewegung des Lenkers 10 um den U3-Punkt, der Anschlag 24 in Anlage an die Abstützfläche 26 gelangt. Hierdurch wird ein zusätzlicher Hebeleffekt erzeugt, der in vorteilhafter Weise das unter Fig. 3 beschriebene, gezielte Aufbrechen des Lagerauges 14 unterstützt.

## Patentansprüche

1. Kraftfahrzeug mit einer einen Lenkerverbund aufweisenden Radaufhängung für ein Rad einer Vorderachse des Kraftfahrzeugs, wobei das Rad über den Lenkerverbund am Kraftfahrzeugaufbau angelenkt und geführt ist und die Radaufhängung so ausgebildet ist, dass im Falle einer Frontalkollision mit einem Hindernis mit geringer Breitenüberdeckung eine Lastübertragung eines Lenkers (10) des Lenkerverbundes auf das Rad unterbrochen und das Rad in Fahrzeuglängs- und querrichtung (x-, y-Richtung) betrachtet nach hinten außen ausgelenkt wird, wobei der Lenker (10) eine Lenkerbasis (12) mit einer kraftfahrzeugaufbauseitigen Lagerstelle umfasst, wobei die kraftfahrzeugaufbauseitige Lagerstelle in Form eines Lagerauges (14) ausgebildet ist und der Lenker (10) über ein in das Lagerauge (14) eingepresstes Gummi-Metall-Lager (18) um eine in Fahrzeuglängsrichtung (x-Richtung) ausgerichtete Lagerachse (20) schwenkbeweglich zwischen zwei in Fahrzeugquerrichtung (y-Richtung) ausgerichteten Lagerschenkeln (22-1, 22-2) einer kraftfahrzeugaufbauseitigen Lagerkonsole (22) gelagert ist, wobei
das Lagerauge (14) als Sollbruchteil ausgebildet ist, das bei Überschreiten einer vorgegebenen Missbrauchslast aufbricht,
**dadurch gekennzeichnet, dass**
die Lenkerbasis (12) im Bereich des Lagerauges (14) einen sich in Richtung der Lagerachse (20) erstreckenden, knopfförmigen Anschlag (24) aufweist, der sich in Fahrzeuglängsrichtung (x-Richtung) nach hinten erstreckend ausgerichtet ist, und dass der in Fahrzeuglängsrichtung (x-Richtung) betrachtete hintere Lagerschenkel (22-1) eine Abstützfläche (26) für den an der Lenkerbasis (12) ausgebildeten knopfförmigen Anschlag (24) aufweist, wobei der knopfförmige Anschlag (24) und die Abstützfläche (26) so positioniert und dimensioniert sind, dass nach Überschreiten einer festgelegten, maximal zulässigen Schwenkbewegung des Lenkers (10) in der kraftfahrzeugaufbauseitigen Lagerkonsole (22) um die Fahrzeughochrichtung (z-Richtung) der knopfförmige Anschlag (24) die am hinteren Lagerschenkel (22-1) ausgebildete Abstützfläche (26) kontaktiert.

2. Kraftfahrzeug nach Anspruch 1,
**dadurch gekennzeichnet, dass**
das Lagerauge (14) des Lenkers (10) zwei radial gegenüberliegend angeordnete Sollbruchstellen (16-1, 16-2) aufweisend ausgebildet ist.

3. Kraftfahrzeug nach Anspruch 2,
**dadurch gekennzeichnet, dass**
die Sollbruchstellen (16-1, 16-2) des Lenkers in Form von zwei Kerbstellen ausgebildet sind, die in eine der beiden ringförmigen Stirnflächen des Lagerauges (14) eingebracht sind, wobei die Kerbstellen in die in Fahrzeuglängsrichtung (x-Richtung) nach vorne ausgerichtete Stirnfläche (14-1) eingebracht sind.

4. Kraftfahrzeug nach Anspruch 2,
**dadurch gekennzeichnet, dass**
die Sollbruchstellen (16-1, 16-2) des Lenkers in Form von zwei - in Umfangsrichtung des Lagerauges (14) betrachtet - lokal begrenzten Materialabtragungen der Lageraugenmantelfläche (14-2) ausgebildet sind.

5. Kraftfahrzeug nach Anspruch 1,
**dadurch gekennzeichnet, dass**
der Lenker (10) als ein Querlenker ausgebildet und zusammen mit einem Längslenker in einer unteren oder oberen Lenkerebene angeordnet ist.

6. Kraftfahrzeug nach einem der Ansprüche 1 bis 5,
**dadurch gekennzeichnet, dass**
der Lenkerverband über einen Hilfsrahmen am Kraftfahrzeugaufbau gelagert ist.

## Claims

1. Motor vehicle with a wheel suspension which has a link assembly for a wheel of a front axle of a motor vehicle, wherein the wheel is articulated and guided on the motor vehicle structure by the link assembly and the wheel suspension is constructed in such a manner that, in the event of a front-end collision with an obstacle with a small width coverage, a load transmission of a link (10) of the link assembly to the wheel is interrupted and the wheel is deflected backwards and outwards when viewed in the longitudinal and transverse vehicle direction (x-, y-direction), wherein the link (10) comprises a link base (12) having a bearing location on the vehicle structure, wherein the vehicle-structure-side bearing location is in the form of a bearing eye (14) and the link (10) is supported by a rubber/metal bearing (18) which is pressed into the bearing eye (14) about a bearing axle (20) which is orientated in the longitudinal vehicle direction (x-direction) so as to be pivotably movable between two bearing members (22-1, 22-2), which are orientated in the transverse vehicle direction (y-direction), of a vehicle-structure-side bearing console (22), wherein
the bearing eye (14) is in the form of a desired breaking component which breaks when a predetermined misuse load is exceeded, **characterized in that**
the link base (12) has in the region of the bearing eye (14) a button-like stop (24) which extends in the direction of the bearing axle (20) and which is orientated in the longitudinal vehicle direction (x-direction) so as to extend towards the rear, and **in that** the rear bearing member (22-1) when viewed in the longitudinal vehicle direction (x-direction) has a support face (26) for the button-like stop (24) which is formed on the link base (12), wherein the button-like stop (24) and the support face (26) are positioned and sized in such a manner that, when a determined maximum permissible pivot movement of the link (10) in the vehicle-structure-side bearing console (22) about the vertical vehicle axis (z-direction) is exceeded, the button-like stop (24) contacts the support face (26) formed on the rear bearing member (22-1).

2. Motor vehicle according to claim 1,
**characterized in that**
the bearing eye (14) of the link (10) is constructed to have two desired breaking locations (16-1, 16-2) which are arranged radially opposite each other.

3. Motor vehicle according to claim 2,
**characterized in that**
the desired breaking locations (16-1, 16-2) of the link are in the form of two notch locations which are introduced into one of the two annular end faces of the bearing eye (14), wherein the notch locations are introduced into the end face (14-1) which is orientated forwards in the longitudinal vehicle direction (x-direction).

4. Motor vehicle according to claim 2,
**characterized in that**
the desired breaking locations (16-1, 16-2) of the link are in the form of two - when viewed in the circumferential direction of the bearing eye (14) - locally limited material removals of the bearing eye cover face (14-2).

5. Motor vehicle according to claim 1,
**characterized in that**
the link (10) is in the form of a transverse link and together with a longitudinal link is arranged in a lower or upper link plane.

6. Motor vehicle according to any one of claims 1 to 5,
**characterized in that**
the link assembly is supported on the motor vehicle structure by means of an auxiliary frame.

## Revendications

1. Véhicule automobile avec une suspension de roue présentant un ensemble de bras de suspension pour une roue d'un essieu avant du véhicule automobile, dans lequel la roue est articulée et guidée sur la carrosserie de véhicule automobile par l'intermédiaire de l'ensemble de bras de suspension et la suspension de roue est conçue de sorte qu'en cas de collision frontale avec un obstacle avec un faible dépassement latéral, une transmission de charge d'un bras de suspension (10) de l'ensemble de bras de suspension vers la roue et la roue est déviée vers l'arrière et vers l'extérieur dans la direction longitudinale et transversale de véhicule (direction x, y), dans lequel le bras de suspension (10) comprend une base de bras de suspension (12) avec un point d'appui côté carrosserie de véhicule automobile, dans lequel le point d'appui côté carrosserie de véhicule automobile est conçu sous forme d'un œillet de palier (14) et le bras de suspension (10) est monté de manière pivotante autour d'un axe de palier (20) orienté en direction longitudinale de véhicule (direction x) par l'intermédiaire d'un palier en caoutchouc-métal (18) pressé dans l'œillet de palier (14) entre deux branches de palier (22-1, 22-2) orientées en direction transversale de véhicule (direction y) d'une console de palier côté carrosserie de véhicule automobile (22), dans lequel
l'œillet de palier (14) est conçu en tant que pièce de rupture de consigne qui se brise lorsqu'une charge d'abus prédéfinie est dépassée, **caractérisé en ce que**
la base de bras de suspension (12) présente, au niveau de l'œillet de palier (14), une butée en forme de bouton (24) s'étendant en direction de l'axe de palier (20), qui est orientée vers l'arrière dans la direction longitudinale de véhicule (direction x), et **en ce que** la branche de palier arrière (22-1), vue dans la direction longitudinale de véhicule (direction x), présente une surface d'appui (26) pour la butée en forme de bouton (24) formée sur la base de bras de suspension (12), dans lequel la butée en forme de bouton (24) et la surface d'appui (26) sont positionnées et dimensionnées de sorte qu'après avoir dépassé un mouvement de pivotement maximal admissible du bras de suspension (10) dans la console de palier (22) côté carrosserie de véhicule automobile autour de la direction ascendante de véhicule (direction z), la butée en forme de bouton (24) entre en contact avec la surface d'appui (26) formée sur la branche de palier arrière (22-1).

2. Véhicule automobile selon la revendication 1,
**caractérisé en ce que**
l'œillet de palier (14) du bras de suspension (10) est conçu avec deux points de rupture de consigne (16-1, 16-2) disposés radialement en vis-à-vis.

3. Véhicule à moteur selon la revendication 2,
**caractérisé en ce que**
les points de rupture de consigne (16-1, 16-2) du bras de suspension sont conçus sous forme de deux encoches qui sont pratiquées dans une des deux faces frontales annulaires de l'œil de palier (14), dans lequel les encoches sont pratiquées dans la face frontale (14-1) orientée vers l'avant dans la direction longitudinale de véhicule (direction x).

4. Véhicule à moteur selon la revendication 2,
**caractérisé en ce que**
les points de rupture de consigne (16-1, 16-2) du bras de suspension sont conçus sous forme de deux enlèvements de matière localement limités de la surface d'enveloppe d'œillet de palier (14-2) vus dans la direction circonférentielle de l'œillet de palier (14).

5. Véhicule automobile selon la revendication 1,
**caractérisé en ce que**
le bras de suspension (10) est conçu en tant que bras de suspension transversal et disposé avec un bras de suspension longitudinal dans un plan de bras de suspension inférieur ou supérieur.

6. Véhicule automobile selon l'une quelconque des revendications 1 à 5,
**caractérisé en ce que**
l'ensemble de bras de suspension est monté sur la carrosserie de véhicule automobile par l'intermédiaire d'un cadre auxiliaire.
